# EUROPÄISCHE PATENTSCHRIFT

(11) **EP 2 537 598 B1**
(45) Veröffentlichungstag und Bekanntmachung des Hinweises auf die Patenterteilung: **04.12.2013**
(21) Anmeldenummer: 12006662.6
(22) Anmeldetag: 10.10.2007
(51) Int. Cl.: B07C 5/342, B07C 5/36, G01N 21/25

(54) **Vorrichtung und Verfahren zur optischen Sortierung von Schüttgut**
Method and device for optically sorting bulk goods
Dispositif et procédé de tri optique de produits en vrac

(30) Priorität: 25.10.2006 DE 202006016604 U
(43) Veröffentlichungstag der Anmeldung: 26.12.2012
(62) Teilanmeldung aus: 07818868.7
(73) Patentinhaber: Fraunhofer-Gesellschaft zur Förderung der angewandten Forschung e.V., 80686 München (DE)
(72) Erfinder: Paul, Detlef, 76297 Stutensee (DE); Burkhard, Matthias, 76226 Karlsruhe (DE); Palmer, Michael, 76228Karlsruhe (DE); Hartrumpf, Matthias, 76187 Karlsruhe (DE)
(74) Vertreter: Rösler, Uwe

(56) Entgegenhaltungen:
- EP-A- 0 146 299
- EP-A- 0 223 446
- EP-A- 0 897 762
- WO-A-98/00243
- DE-U1- 20 320 957

## Beschreibung

### Technisches Gebiet

Die Erfindung bezieht sich auf eine Vorrichtung und ein Verfahren zur optischen Selektion von Bestandteilen wenigstens einer Fraktion aus einem längs einer Förderrichtung geförderten Schüttgutstrom, mit einer Kameraeinheit, deren Blickrichtung auf den Schüttgutstrom gerichtet ist, einem in Kamerablickrichtung hinter dem Schüttgutstrom angeordneten Hintergrund, dessen Farbe an die Farbe einer ausgewählten Fraktion von Bestandteilen des Schüttgutstromes anpassbar ist, eine mit der Kameraeinheit in Verbindung stehende Auswerte- und Steuereinheit, in der nach einem Entscheidungskriterium Steuerbefehle für eine Separiereinheit generiert werden, die bei Ansteuerung die zu selektierenden Bestandteile aus dem Schüttgutstrom zu separieren vermag.

### Stand der Technik

Bei an sich bekannten Anlagen zur automatisch optischen Sortierung von Schüttgütern wird das zu sortierende Material in möglichst einlagiger Schicht auf ein Förderband aufgebracht. Das Förderband läuft mit einer Geschwindigkeit von z.B. 3m/s. Am Ende des Förderbandes wird das Material vom Förderband abgeworfen und fliegt in einer Wurfparabel weiter. Kurz nach der Abwurfkante schaut eine Zeilenkamera auf den Materialstrom. Die von der Kamera aufgenommenen Bilder werden von einem Rechner ausgewertet. Die Bestandteile des Schüttgutstromes, die es auszusortieren gilt, werden anhand ihrer Farbe und ggf. auch ihrer Form erkannt und mit Hilfe von kurzen Druckluftstößen aus dem frei fliegenden Materialstrom ausgeblasen. In anderen Realisierungsformen von optischen Sortierern wird der frei fliegende Materialstrom nicht über ein Förderband erzeugt, sondern der Schüttgutstrom rutscht über eine Rutsche oder der Schüttgutstrom wird in Form eines frei fallenden Materialstromes geschüttet.

Ein wichtiges Detail bei der Auslegung derartiger optischer Sortiereinrichtungen betrifft den optischen Hintergrund, vor dem die Kamera das zu sortierende Material aufnimmt. Der Hintergrund wird dabei in der Regel so gestaltet, dass sich die zu selektierenden und somit zu erkennenden Objekte in jedem Fall mit ausreichendem Kontrast vom Hintergrund abheben.

Erste Wahl ist in vielen Fällen ein passiver schwarzer Hintergrund, der sich auf einfache Weise als Lichtfalle realisieren lässt. Falls im Materialstrom auch tiefschwarze Objekte erkannt werden müssen, wird man statt dessen einen homogenen aktiven Hintergrund wählen, der in einer Farbe leuchtet, die im Schüttgut nicht vorkommt - z.B. ein reines Blau. Dies Vorgehen ist allerdings nur dann sinnvoll, wenn die zu erkennenden Objekte im Vergleich zum örtlichen Auflösungsvermögen der abbildenden Optik und der Kamera hinreichend groß sind und dementsprechend hinreichend viele Bildpunkte zur Erkennung von Farbe und Form der Objekte zur Verfügung stehen. Sind hingegen die Objekte zu klein, so kann ihre Farbe nicht mehr sicher erkannt werden. Zur Lösung dieses Problems ist es grundsätzlich möglich, die Ortsauflösung des Systems zu erhöhen. Dadurch wird aber bei gegebener Systemleistung der Materialdurchsatz verringert und damit der wirtschaftliche Nutzen.

In einigen bekannten Anwendungsfällen wird die Farbe des Hintergrundes entsprechend der Farbe des durchzulassenden Materials gewählt, so dass das durchzulassende Material vor dem Hintergrund aufgrund des damit gegebenen Farbangleichs optisch verschwindet und sich nur die auszublasenden Objekte mit ausreichendem Kontrast davor abheben. Wenn es z.B. gilt in einem Materialstrom von kleinen roten Objekten kleine andersfarbige Objekte zu erkennen, wäre ein roter Hintergrund zu wählen, vor dem sich nur die nicht-roten Objekte abheben, die dann von der Kameraeinheit erfasst werden können.

Die Gestaltung eines angepassten Hintergrundes ist durchaus vorteilhaft und bereits in der Praxis bewährt. Jedoch ergibt sich die Schwierigkeit der Realisierung eines homogenen Hintergrundes in der gewünschten Farbe und Helligkeit. Das gilt insbesondere dann, wenn auf einer Sortiermaschine in relativ kurzer zeitlicher Folge unterschiedliche Materialien sortiert werden und mit jedem Materialwechsel entsprechende Arbeiten zur Umrüstung des Hintergrundes erforderlich werden.

In einigen Anwendungen der optischen Sortierung von Schüttgütern lassen sich die Objekte schon aufgrund ihres Grautons, d.h. aufgrund ihrer Helligkeit, klassifizieren - eine Auswertung der Farbe ist in diesen Fällen nicht notwendig. In solchen Fällen wird in an sich bekannter Weise mit einer einstellbaren Hintergrundbeleuchtung gearbeitet. Zur Realisierung kann man z.B. im Hintergrund eine diffus reflektierende Fläche anbringen, die von einer oder mehreren Leuchtstoffröhren angestrahlt wird. Die Helligkeit des Hintergrundes ist dann durch Wahl einer Fläche mit geeignetem Remissionsfaktor und durch Regelung der Lampenhelligkeit auf den gewünschten Wert einstellbar. Der örtliche Verlauf der Helligkeit über die Sortierbreite läßt sich bei Bedarf z.B. durch geeignete Blenden vor den Lampen individuell anpassen.

Für die Gestaltung eines farbigen Hintergrundes mit einer definierten Farbe verwendet man beim Stand der Technik eine oder mehrere weiße Lampen und gibt der im Hintergrund angebrachten Fläche eine geeignete Farbe. Dazu werden z.B. farbige Klebefolien eingesetzt oder der gewünschte Farbton als farbiger Lack gemischt. Dieses Verfahren wird z.B. bei Sortiermaschinen zur Erkennung von Fremdkörpern in Tabak eingesetzt.

Eine weitere Methode nach dem Stand der Technik besteht darin, die Prüflinge selbst für die Herstellung der Hintergrundfarbe zu nutzen, indem man z.B. eine repräsentative Probe zermahlt und aus dem Mahlgut die gewünschte Farbe herstellt. In allen vorstehenden Fällen ist die Einrichtung einer Hintergrundbeleuchtung in der Farbe des durchzulassenden Materialstroms sehr aufwändig und lohnt sich nur dann, wenn auf der betreffenden Sortiermaschine über längere Zeit dasselbe Produkt sortiert wird. Weitere Nachteile der bislang im Einsatz befindlichen Anordnungen sind die Anfälligkeit des Hintergrundes gegenüber Verschmutzung, ein Ausbleichen der Farbe oder Fehlanpassungen infolge von Lampenalterung. Weiterhin ist es nur mit recht hohem Aufwand möglich, den gewünschten Helligkeitsverlauf über die gesamte Sortierbreite herzustellen.

Zum druckschriftlichen, bekannten Stand der Technik sei auf folgende Veröffentlichungen verwiesen:
In der EP 0 146 299 B1 ist ein Kanalsortierer beschrieben, bei dem bspw. ein aus Kaffeebohnen bestehender Schüttgutstrom durch eine Messzelle fällt. Die Messzelle setzt sich einerseits aus einem beleuchteten Hintergrund und andererseits aus einem über diskrete Fotosensoren verfügenden Detektor zusammen. Der Schüttgutstrom fällt senkrecht durch die so genannte Betrachtungszone, die von dem Detektor mit Blickrichtung auf den Hintergrund begrenzt wird. Wird ein sich farblich vom Hintergrund abhebendes Fehlteil im Schüttgutstrom detektiert, so erfolgt eine Aktivierung einer der Messzelle in Fallrichtung des Schüttgutstromes nachfolgenden Hochdruckdüseneinrichtung zur Selektion des Fehlteils aus dem Schüttgutstrom.

Der US 2003/0034282 A1 ist ein Verfahren zur Selektion von Fehlteilen aus einem Schüttgutstrom zu entnehmen, das auf einem vergleichbaren Selektionsprinzip beruht, wie das vorstehend beschriebene Verfahren, wobei in diesem Fall der Schüttgutstrom vor einem LCD-Display, der den farblichen Hintergrund darstellt, von einer Kameraeinheit erfasst wird. Um Farbdriften des farblichen Hintergrundes zu vermeiden, wird der Farbeindruck mittels eines Spektrometers erfasst und bei Abweichungen entsprechend korrigiert.

Die US 2006/0016735 A1 beschreibt einen Sortierer für transparente Granulate, die von einem Bandförderer längs einer Wurfparabel durch zwei längs der Wurfbahn angeordnete Detektoreinheiten fallen, von denen eine Detektoreinheit die Vorderseite und die andere Detektoreinheit die Rückseite der Granulate erfassen. Durch Vergleich der erfassten Vorder- und Rückseitenaufnahmen können auf die Transparenz der Bestandteile geschlossen und im Weiteren unter Zugrundelegung eines Auswahlkriteriums mittels einer an sich bekannten Luftdruckdüsenanordnung erfasste Fehlteile aus dem Schüttgutstrom ausgesondert werden.

### Darstellung der Erfindung

Der Erfindung liegt daher die Aufgabe zugrunde, eine Vorrichtung sowie ein Verfahren zur optischen Selektion von Bestandteilen wenigstens einer Fraktion aus einem längs einer Förderrichtung geförderten Schüttgutstrom, mit einer Kameraeinheit, deren Blickrichtung auf den Schüttgutstrom gerichtet ist, einem in Kamerablickrichtung hinter dem Schüttgutstrom angeordneten Hintergrund, dessen Farbe an die Farbe einer ausgewählten Fraktion von Bestandteilen des Schüttgutstromes anpassbar ist, eine mit der Kameraeinheit in Verbindung stehende Auswerte- und Steuereinheit, in der nach einem Entscheidungskriterium Steuerbefehle für eine Separiereinheit generiert werden, die bei Ansteuerung die zu selektierenden Bestandteile aus dem Schüttgutstrom zu separieren vermag, dadurch weiterzubilden, dass eine Steigerung der Leistung in Bezug auf Sortierqualität und Durchsatz möglich wird, und dies insbesondere bei der Sortierung kleiner Objekte. Ferner soll es möglich sein, die Farbe des Hintergrundes, vor dem der Schüttgutstrom von der Kamera optisch erfasst wird, möglichst ohne großen Aufwand, vorzugsweise automatisch, an die jeweilige Sortieraufgabe anzupassen. Die Vorrichtung soll auch in solchen Fällen unter wirtschaftlichen Gesichtspunkten einsetzbar sein, in denen sich die Sortieraufgabe häufig und schnell hintereinander ändert. Des Weiteren gilt es ein entsprechendes Verfahren anzugeben, das durch möglichst einfache Verfahrensschritte eine automatische Anpassung der Partikelselektion an unterschiedliche Sortieraufgaben ermöglicht und dies bei höchster Selektionsgüte.

Die Lösung der Aufgabe ist im Anspruch 1 angegeben. Gegenstand des Anspruches 12 ist ein lösungsgemäßes Verfahren. Den Erfindungsgedanken vorteilhaft weiterbildende Merkmale sind den abhängigen Ansprüchen sowie der nachfolgenden Beschreibung insbesondere unter Bezugnahme auf die Ausführungsbeispiele zu entnehmen.

Lösungsgemäß zeichnet sich eine Vorrichtung zur optischen Selektion von Bestandteilen wenigstens einer Fraktion aus einem längs einer Förderrichtung geförderten Schüttgutstrom mit den Merkmalen des Oberbegriffes des Anspruches 1 dadurch aus, dass die Kameraeinheit eine ortsauflösende Kamera ist und über wenigstens zwei, vorzugsweise drei Farbkanäle mit jeweils unterschiedlichen spektralen Empfindlichkeiten verfügt, wobei der Hintergrund eine Vielzahl einzelne Leuchtmittel aufweist, von denen jedes einzelne Leuchtmittel Licht mit einer spektralen Verteilung emittiert, die auf jeweils einen der spektralen Empfindlichkeitsbereiche der Kamera angepasst ist. Ferner weist die Auswerte- und Steuereinheit eine Einheit auf, welche die Bestimmung des örtlichen Verlaufes eines Farbwertes in Richtung der Sortierbreite erlaubt. Die Sortierbreite ist als Richtung quer zur optischen Achse der Kamera und quer zur Förderrichtung definiert. Mit dieser Einheit kann der mit der Kamera ermittelte Farbwert des nicht auszusortierenden Bestandteils des Schüttgutstroms entlang der gesamten Sortierbreite örtlich aufgelöst erfasst werden. Dieser örtliche Verlauf des Farbwertes ist nicht notwendigerweise über die gesamte Sortierbreite konstant, sondern u. a. beleuchtungsbedingt insbesondere an den Randbereichen der Sortierbreite Änderungen unterworfen. Er wird als Basis für ein Regelmodul verwendet, das die einzelnen Leuchtmittel hinsichtlich ihrer Helligkeit derart einstellt, dass die Farbe des Hintergrundes den örtlichen Verlauf des bestimmten Farbwerts annimmt. Auf diese Weise kann gewährleistet werden, dass die gesamte Sortierbreite in gleicher Qualität genutzt werden kann, um farbliche Unterschiede zwischen Ausschussteilen und den Gutteilen im Schüttgutstrom zu erfassen, wodurch die Zuverlässigkeit in der Erkennung von Ausschussteilen verbessert werden kann.

Weiterhin vermag sich die lösungsgemäße Vorrichtung automatisch auf die jeweilige Sortieraufgabe einzustellen, indem in einem ersten Schritt der Farbwert jener Fraktion des Schüttgutstromes bestimmt wird, die unbeeinflußt innerhalb des Schüttgutstromes zu belassen ist. Hierzu wird eine Stichprobe des durchzulassenden Materials zur Bildaufnahme auf die Förderstrecke gegeben. Während der Bildaufnahme wird der Schüttgutstrom mittels kameraseitig über dem Schüttgutsrom angebrachten Lampen im Auflicht beleuchtet.

Zur Bestimmung des Farbwertes der durchzulassenden Fraktion des Schüttgutstromes wird die Farbverteilung der Bestandteile des Schüttgutstroms berechnet, beispielsweise in Form von Farbhistogrammen. Vorzugsweise werden hierzu die Farbhistogramme als Funktion des Ortes längs der gesamten, von der Kameraeinheit erfassten Sortierbreite ermittelt. Die Sortierbreite ist dabei gegeben durch den Kamerablickwinkel, den Abstand zwischen Kameraeinheit und Schüttgutstrom sowie von der räumlichen Erstreckung des Hintergrundes quer zur Förderrichtung des Schüttgutstromes.

Während der Farbwertbestimmung wird der ebenfalls von der Kameraeinheit erfasste, hinter dem Schüttgutstrom angeordnete Hintergrund entweder stromlos geschaltet, oder die Leuchtmittel ergeben auf dem Hintergrund einen neutralen Farbton und lassen den Hintergrund beispielsweise grau in Erscheinung treten, zum Zwecke einer möglichst unverfälschten Farbwertbestimmung der jeweils durchzulassenden Bestandteile im Schüttgutstrom. Im Anschluss an die Bildaufnahme wird aus der gemessenen Farbverteilung für jeden Ort, längs der von der Kameraeinheit erfaßten Sortierbreite, ein charakteristischer Farbwert für das durchzulassende Produkt berechnet. Zur Berechnung wird beispielsweise das Maximum der Farbverteilung verwendet.

In einem nächsten Schritt gilt es den Hintergrund möglichst farb- und helligkeitsidentisch an den ermittelten, ortsbezogenen Farbwert der jeweils im Schüttgutstrom enthaltenen und durchzulassenden Bestandteile anzupassen. Zur Adaption von Farbe und Helligkeit des Hintergrundes werden kameraüberwacht die einzelnen, dem Hintergrund zugeordneten Leuchtmittel in ihrer Helligkeit derart eingestellt, dass sich auf dem Hintergrund eine möglichst gute Annäherung an den Ortsverlauf der während der Bildaufnahme gemessenen Helligkeit und Farbe der durchzulassenden Bestandteile des Schüttgutstromes ergibt. Sprünge bzw. unstetige Helligkeits- sowie Farbverläufe auf dem Hintergrund gilt es zu vermeiden.

Zur Realisierung eines möglichst glatt bzw. kontinuierlich in Erscheinung tretenden Helligkeitsverlaufes auf dem Hintergrund ist vorzugsweise zwischen dem Schüttgutstrom und der Vielzahl der einzelnen Leuchtmittel ein das Licht der einzelnen Lampen streuendes Mittel vorgesehen, vorzugsweise in Form einer Streuscheibe, die es der Kamera verwehrt direkt auf die Leuchtmittel zu blicken. Die einzelnen, vorzugsweise in einer Ebene zeilenförmig oder in einem Muster angeordneten Leuchtmittel sind bezüglich ihrer Helligkeit ansteuerbar, entweder individuell, d.h. einzeln, oder in kleineren Gruppen von jeweils benachbarten Lampen.

In einer bevorzugten Ausführungsform wird als Kameraeinheit eine Videokamera oder Zeilenkamera vorgesehen, die über einzelne Farbkanäle verfügt, die jeweils getrennt voneinander ansprechbar sind. Übliche, farbtüchtige Kameras verfügen in der Regel über drei getrennte Farbkanäle, nämlich Rot, Grün, Blau mit für den jeweiligen Kameratyp spezifischen spektralen Empfindlichkeiten. Soll beispielsweise bei einer gegebenen Videokamera das Farbsignal für "reines Grün" erzeugt werden, so ist hierfür ein Leuchtmittel zu einzusetzen, dessen Emissionsspektrum nach Möglichkeit ausschließlich im Bereich der spektralen Empfindlichkeit des Grünkanals der Kamera liegt. Entsprechendes gilt grundsätzlich für jede beliebige spektrale Empfindlichkeitsverteilung der einzelnen Farbkanäle von Kameras, die beispielsweise alternativ oder in besonderer Erweiterung auch Farbkanäle im UV-, IR- oder NIR-Spektralbereich umfassen. Um der vorstehend aufgezeigten Forderung nach einem möglichst selektiven Ansprechen der Farbkanäle einer farbtüchtigen Kamera gerecht zu werden, sind die unterschiedlichen Leuchtmittel der Hintergrundbeleuchtung in ihren spektralen Emissionseigenschaften jeweils auf einen Farbkanal der Kameraeinheit abgestimmt.

In besonders bevorzugter Weise bieten sich als Leuchtmittel Lampen in Form von Leuchtdioden mit unterschiedlichen Farben an, wobei die unterschiedlichen Farben jeweils einem der Farbkanäle der Kamera entsprechen.

Alternativ ist es möglich, die Farben der einzelnen Leuchtmittel durch eine Kombination einer geeignet ausgewählten Lampe mit einem speziell an den jeweiligen spektralen Empfindlichkeitsbereich eines Farbkanals der Kameraeinheit angepassten Farbfilter auszubilden. So lassen sich Farbfilter auch in Kombination mit Leuchtdioden verwenden, um ein Übersprechen zu minimieren, falls das jeweilige Emissionsspektrum der LED so ausgebildet ist, dass das Licht dieser LED von mehr als einem Farbkanal der Kameraeinheit detektiert werden kann. Grundsätzlich lassen sich beliebige Leuchtmittel einsetzen, die den vorstehenden Forderungen entsprechen. Besonders vorteilhaft sind Leuchtdioden, deren Emissionsspektren von vornherein auf den spektralen Empfindlichkeitsbereich jeweils eines Farbkanals der Kamera abgestimmt sind.

Alternativ ist es ebenso denkbar, zur Gestaltung der Farbe des Hintergrundes eine Monitoreinheit zu verwenden, die über eine Vielzahl einzelner, selbstleuchtender Farbpixel verfügt, deren Emissionsspektren der jeweiligen spektralen Empfindlichkeitsverteilung der Farbkanäle der Kameraeinheit entsprechen. Hierfür eignen sich Monitoreinheiten auf der Basis einer Braun'schen Röhre oder Monitoreinheiten auf Basis von LCD- oder Plasma-Displays.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1: schematisierte Darstellung einer Vorrichtung zur optischen Selektion von Bestandteilen aus einem Schüttgutstrom,
- Fig. 2a, b: Längs- und Querschnittdarstellung durch einen adaptiv anpassbaren Hintergrund,
- Fig. 3: Zeitdiagramm zur Erläuterung einer gepulst betriebenen Betriebsweise der Leuchtmittel in Abstimmung zur Kameraeinheit, sowie
- Fig. 4: Schema zur Illustration einer m-kanaligen Hintergrundbeleuchtung.

### Wege zur Ausführung der Erfindung, gewerbliche Verwendbarkeit

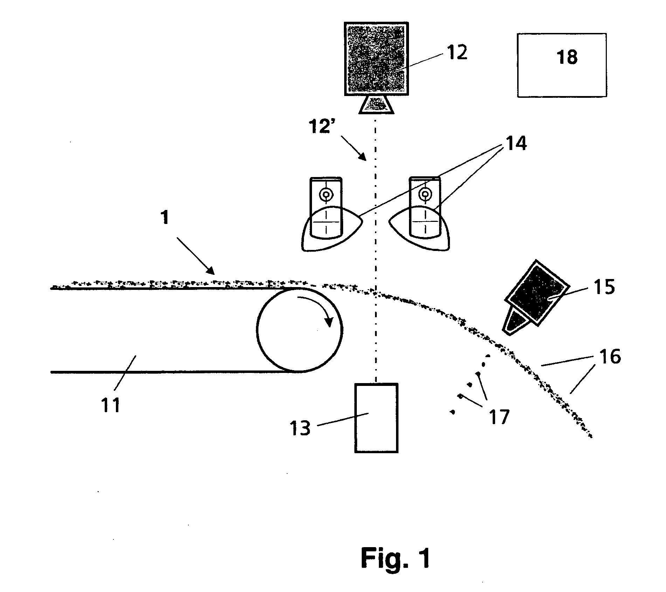

Figur 1 zeigt den schematischer Aufbau einer Vorrichtung zur optischen Selektion von Bestandteilen wenigstens einer Fraktion, die sich vorzugsweise durch die Farbe auszeichnet, aus einem längs einer Förderrichtung 11 geförderten Schüttgutstrom 1, der nach Verlassen der Förderrichtung 11 längs einer freien Wurfparabel in einem nicht weiter dargestellten Auffangbehältnis aufgefangen wird. Weitgehend senkrecht zur freien Flugrichtung des Schüttgutstromes 1 befindet sich eine farbtüchtige Kameraeinheit 12, deren Blickrichtung 12' den Schüttgutstrom 1 vor einem farblich adaptiv anpassbaren Hintergrund 13 erfasst. Zur Ausleuchtung des Schüttgutstromes 1 sind symmetrisch zur Blickrichtung 12' der Kameraeinheit 12 Lampen 14 vorgesehen, die den Schüttgutstrom 1 mit Weißlicht beleuchten. Die Besonderheit der Vorrichtung besteht darin, daß der Hintergrund 13 bezüglich Farbe und Helligkeit an jene Bestandteile innerhalb des Schüttgutstromes 1 angepasst wird, die nicht aussortiert und deshalb auch nicht erkannt zu werden brauchen. Die Kameraeinheit 12 vermag bei gelungener Anpassung die durchzulassenden Bestandteile des Schüttgutstromes 1 gegenüber dem in Farbe und Helligkeit identischem Hintergrund nicht zu erkennen. Sind jedoch farblich andersartige Bestandteile innerhalb des Schüttgutstromes 1 vorhanden, so werden diese von einer Auswerte- und Steuereinheit 18 erkannt. Zur Selektion derartig andersartiger Bestandteile innerhalb des Schüttgutstromes 1 wird eine Druckluftdüseneinheit 15 aktiviert, die die andersfarbigen Bestandteile 17 per Luftdruckstoß aus dem Schüttgutstrom 16 zu separieren vermag.

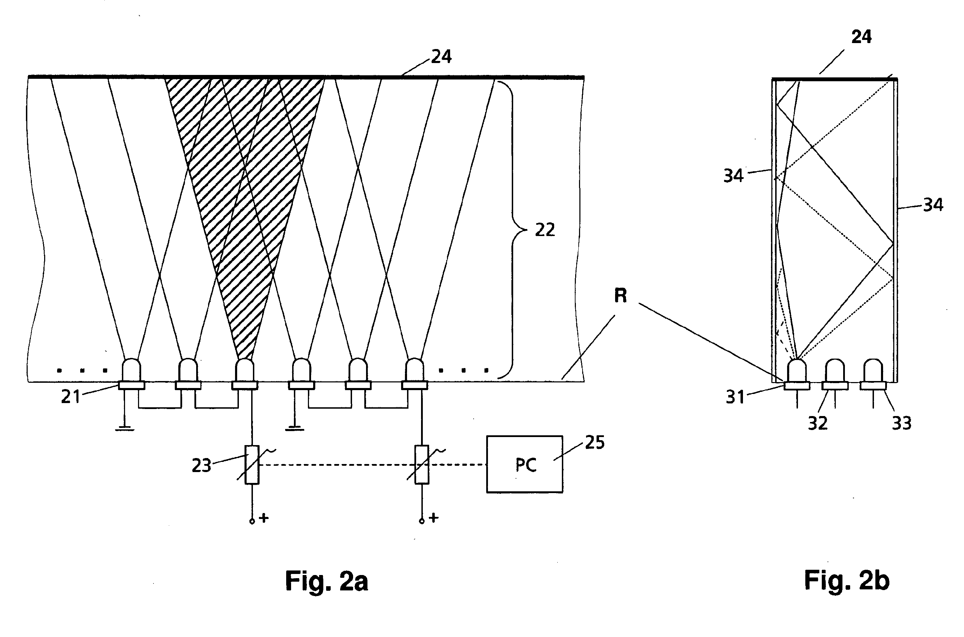

In Figur 2a ist eine Längsschnittdarstellung durch den in Figur 1 mit dem Bezugzeichen 13 versehenen Hintergrund dargestellt. Die Darstellung in Figur 2b entspricht einer Querschnittsdarstellung durch den Hintergrund 13. Der Hintergrund 13 schließt im dargestellten Ausführungsbeispiel ein quaderförmiges Volumen ein, an dessen Rückwand R als Leuchtdioden ausgebildete Leuchtmittel 21 zeilen- und spaltenförmig nebeneinander angeordnet sind. Der Rückwand R gegenüberliegend ist eine Streuscheibe 24 vorgesehen, auf die die Blickrichtung der Kameraeinheit 12 gerichtet ist. Die Streuscheibe 24 ist eine in Transmission streuende Fläche. Die in Figur 2a als kleine Gruppe von benachbarten LEDs ausgebildeten Lampen 21 besitzen ein einheitliches Emissionsspektrum und können über ein gemeinsames Stellglied 23 in ihrer Helligkeit von einer Auswerte- und Steuereinheit 25 in Form eines PC-Rechners geregelt werden. Die an der Rückwand R angeordneten Leuchtmittel 21 sind durch die Überlagerungsstrecke 22 gegenüber der Streuscheibe 24 beabstandet, so dass die am Ort der Streuscheibe 24 vorhandene Helligkeit durch Überlagerung der Lichtstrahlen von allen an der Rückwand angebrachten Leuchtmittel entsteht. Auf diese Weise wird dafür gesorgt, dass sich aus dem Blickwinkel der Kamera längs der Beobachtungsbreite, bzw. längs der Sortierbreite, auf dem Hintergrund trotz des Einsatzes einer Vielzahl diskreter Einzellampen ein glatter Helligkeitsverlauf einstellt.

Um den Hintergrund am Ort der Streuscheibe 24 in einem bestimmten Farbton in Erscheinung treten zu lassen, werden die einzelnen Lampen 21 entsprechend den Farbkanälen der Kamera 12 in Klassen aufgeteilt und zugleich wird dafür gesorgt, dass die Emissionsspektren der einzelnen Farbklassen auf die spektrale Empfindlichkeit je eines der Farbkanäle der Kamera 12 abgestimmt sind. Dies ist entweder realisierbar, indem die einzelnen Leuchtmittel als Weißlichtlampen in Kombination mit entsprechenden Farbfiltern ausgebildet sind, oder die einzelnen Leuchtmittel sind beispielsweise als Leuchtdioden mit entsprechend gewählten Emissionsspektren ausgebildet.

Zur Illustration einer Anordnung mit in drei Farbklassen unterteilten Leuchtmitteln sei auf die Querschnittsdarstellung in Figur 2b verwiesen, die drei Reihen von Lampen mit unterschiedlichen Farben darstellt. So weisen die in der ersten Reihe dargestellten Lampen 31 das Emissionsspektrum E1, die Lampen 32 das Emissionsspektrum E2 und die Lampen 33 das Emissionsspektrum E3 auf. Beim Einsatz einer herkömmlichen Farbkamera als Kameraeinheit 12 entsprechen die einzelnen Emissionsspektren E1, E2 und E3 den Farben Rot, Grün und Blau.

Aufgrund der zwischen der Rückwand R und der vorderen Streuscheibe 24 vorhandenen Überlagerungsstrecke 22 überlagern sich die Lichtanteile aller Leuchtmittel E1, E2 und E3 am Ort der Streuscheibe 24 unter Ausbildung eines homogenen Farbmischtons. Die verspiegelten Seitenwände 34, die die Rückwand R mit der Streuscheibe 24 verbinden, sorgen einerseits dafür, dass das gesamte, von den Leuchtmitteln ausgehende Licht auf die Streuscheibe 24 fällt und andererseits dafür, dass die Helligkeitsverteilung auf der Streuscheibe 24 konstant ist.

Die in den Figuren 2a und b skizzierte Anordnung der Leuchtmittel besteht aus drei Zeilen von Lampen, wobei die Lampen einer Zeile jeweils einer Farbklasse zuordenbar sind. Abweichend von dieser Anordnung sind jedoch auch andere geometrische Anordnungen der Leuchtmittel längs der Rückwand R des in den Figuren 2a und b dargestellten Hintergrundes denkbar.

Zur automatischen Adaption der Hintergrundbeleuchtung ist es erforderlich, dass sämtliche einzelne Leuchtmittel oder jeweils zu Gruppen zusammengefasste Leuchtmittel hinsichtlich ihrer Helligkeit von einer Auswerte- und Steuereinheit einstellbar sind. Dazu dienen rechnergesteuerte Stellglieder 23, wie dies aus dem Ausführungsbeispiel gemäß Figur 2a zu entnehmen ist. Zur Einstellung der Helligkeit eignen sich insbesondere Stellglieder zur Variation des Stromes oder der Betriebsspannung für die einzelnen Lampen. Eine weitere Möglichkeit zur Helligkeitseinstellung bietet eine gepulste Spannungs- bzw. Stromversorgung, wobei die Helligkeit der Lampen durch geeignete Wahl der Pulsweiten variiert werden kann.

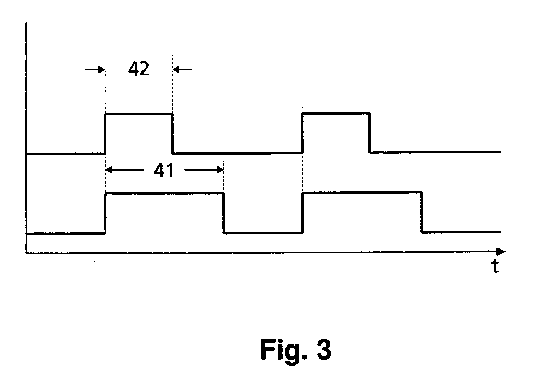

Im Fall des Einsatzes von Leuchtdioden vermögen diese bei einer gepulsten Ansteuerung jeweils Lichtblitze zu erzeugen. Im Zusammenhang mit handelsüblichen Zeilenkameras ist diese Art der Helligkeitssteuerung nur dann sinnvoll, sofern die Steuerimpulse für die Leuchtdioden mit der Integrationszeit der Kamera synchronisiert sind. In Figur 3 ist hierzu ein Zeitdiagramm dargestellt, in dem einerseits die Intervalle 41 für die Integrationszeit der Kamera und andererseits die zu diesen Intervallen 41 synchronisierten Steuerimpulse 42 zur Ansteuerung der Leuchtdioden oder Gruppen von Leuchtdioden dargestellt sind. In dieser Realisierung ist jeder Zeitpunkt für das Einschalten aller Leuchtdioden gleich, die Impulsdauer ist aber für jede Gruppe von Leuchtdioden individuell wählbar.

Mit Hilfe der lösungsgemäßen Vorrichtung ist es möglich, eine Adaption des Hintergrundes an die Farbe der durchzulassenden Bestandteile eines Schüttgutstromes nach entsprechender Farbbestimmung der durchzulassenden Bestandteile jeweils voll automatisch durchzuführen. Die Farbadaption des Hintergrundes erfolgt in einem ersten Schritt durch Messung der Farbverteilung für die durchzulassenden Bestandteile des Schüttguts und dies für jeden Ort, der von der Kamera längs des farblich anpassbaren Hintergrundes erfassbar ist. Hierbei wird die adaptive Hintergrundbeleuchtung z.B. auf eine neutrale Farbe, beispielsweise grau eingestellt, während das Schüttgut durch die Sortiervorrichtung läuft. In einem zweiten Schritt erfolgt die Ermittlung des charakteristischen örtlichen Verlaufs der Farbe für die durchzulassenden Bestandteile des Schüttgutstromes, beispielsweise durch Berechnung des Schwerpunktes oder der Maximumwerte aus den für jeden Ort gemessenen Farbverteilungen. Im Weiteren erfolgt die Einstellung der Helligkeit für die einzelnen im Hintergrund vorgesehenen Leuchtdioden oder Gruppen aus Leuchtdioden derart, dass der Farbverlauf des Hintergrundes dem ermittelten charakteristischen örtlichen Verlauf der Farbe der durchzulassenden Bestandteile des Schüttgutstromes entspricht. Die Helligkeitseinstellung und damit verbunden die farbliche Anpassung des Hintergrundes erfolgt vorzugsweise im Rahmen eines iterativen Angleichungsverfahrens.

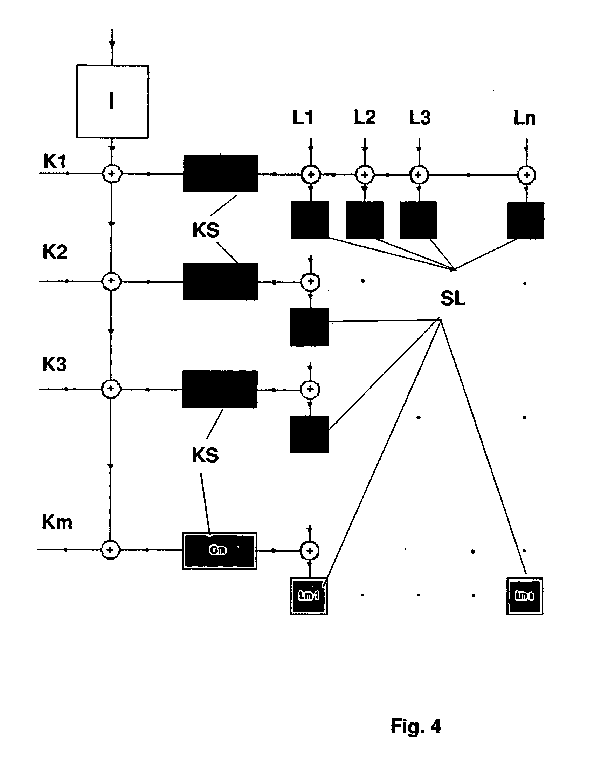

In Figur 4 ist eine weitere Anordnung zur Ansteuerung der dem Hintergrund zuordenbaren Leuchtmittel gezeigt, die im Unterschied zu dem vorstehend erläuterten Ausführungsbeispiel über Leuchtmittel verfügt, die in m spektrale Kanäle K1, ... , Km unterteilbar sind. So sei angenommen, dass zu jedem der m Spektralkanäle K1, ... , Km, jeweils n einzelne Leuchtmittel L1, ... , Ln vorgesehen sind, deren Helligkeiten für eine adaptive Anpassung des mit dem Hintergrund zu generierenden Gesamtfarbverlaufes an den in der vorstehenden Weise gewonnenen, örtlichen Verlauf des Farbwertes für die zu akzeptierenden Bestandteile im Schüttgutstrom, einzeln einzustellen sind.

Ferner sei angenommen, dass die m Spektralkanäle einen vom UV-C bis MID-IR reichenden Spektralbereich unterteilen. Jedes einzelne Leuchtmittel Li innerhalb der jeweils m Spektralkanäle, bzw. jede Gruppe von Leuchtmitteln, wird zur Helligkeitsadaption einzeln von einem Stellglied SL angesteuert. Um die Gesamthelligkeit aller zu einem Spektrakanal Kj zugehöriger Leuchtmittel Lj1, ...,Ljn einzustellen, ist es sinnvoll die Ansteuersignale für die einzelnen Stellglieder SL zuvor mit einem Gesamthelligkeitssignal für den jeweiligen Kanal zu verknüpfen. Dies erfolgt jeweils über ein Kanalstellglied KS. Sofern die Stellglieder wie in Fig. 4 gezeigt verknüpft sind, lässt sich zusätzlich die Gesamthelligkeit der Beleuchtung mit einem einzelnen Hauptstellglied I regeln.

Das lösungsgemäße Sortierverfahren lässt sich somit für Bestandteile in Schüttgutströmen anwenden, die über eine weitgehend beliebige Färbung verfügen. Voraussetzungen für eine diesbezügliche erfolgreiche Anwendung des Verfahrens sind bildgebende Sensoren und räumlich modulierbare Lichtquellen für den jeweiligen betrachteten Spektralbereich. Mit Leuchtdioden lassen sich beispielsweise die Spektralbereiche von UV-C bis MID-IR vollständig abdecken.

Sofern die einzelnen m Spektralkanäle sowohl von Seiten der Beleuchtung als auch seitens des Lichtnachweises ausreichend voneinander getrennt sind, kann jeder Kanal für sich allein behandelt werden; das Prinzip lässt sich daher m-kanalig (mit m theoretisch unendlich) realisieren und bietet für jeden Spektralkanal folgenden Vorteil:
Gängige Kamerasysteme weisen in aller Regel bei Bildaufnahmen mit Auflichtbeleuchtung einen charakteristischen Empfindlichkeitsverlauf über die zu betrachtende Sortierbreite auf. Durch die Adaption des Helligkeitsverlaufs des Hintergrunds an den Helligkeitsverlauf für die Hauptkomponente des Schüttgutstroms kann dieser Verlauf ausgeglichen werden. Somit kann erreicht werden, dass die Helligkeit der abgebildeten Hauptkomponente des Schüttgutstroms an jedem Punkt der Inspektionslinie der Helligkeit des Hintergrundes entspricht. Dadurch wird die Hauptkomponente des Materialstroms für die Bildverarbeitung "unsichtbar". Im Idealfall sind nur noch Abweichungen davon sichtbar. Entsprechend wird die Bildverarbeitung entlastet bzw. vereinfacht.

Bei mehrkanaligen Anordnungen wird es für jeden Kanal in der Regel einen abweichenden Farb- bzw. Helligkeitsverlauf geben. Allenfalls durch Verwendung von Komponenten extremer Güte, bspw. apochromatische Objektive etc., kann ein gleicher Empfindlichkeitsverlauf für alle inspizierten Spektralbereiche erreicht werden. Mit Anordnungen gemäß dem in Figur 4 dargestellten Ausführungsbeispiel kann somit jeder spektrale Kanal für sich eingestellt werden. Für jeden einzelnen Kanal erhält man dann den oben erwähnten Vorteil. Dadurch können die Forderung nach einem gleichen Verlauf der Empfindlichkeit entfallen und mit entsprechend einfacheren Komponenten eine gleich gute Sortierung erzielt werden.

Die Einstellung der Hintergrundfarbe bei m-Spektralkanälen erfolgt bei jedem Kanal vorzugsweise in einem dreistufigen Prozess. In der ersten Stufe wird der Hintergrund auf einen Kontrastwert zur Produkthelligkeit eingestellt, d.h. jene Helligkeit, die die Bestandteile im Schüttgutstrom aufweisen, die es gilt nicht auszusortieren. Die zweite Stufe dient dem Einlernen der Produkthelligkeit vor genau diesem Hintergrund und in der dritten Stufe übernimmt die Hintergrundbeleuchtung die in Stufe zwei ermittelte Produkthelligkeit.

Die Prozessstufen eins und drei stellen jeweils iterative Prozesse dar, die selbst wiederum in fünf Teilschritte unterteilt werden können. Dabei wird in Teilschritt eins als erstes für jeden Kanal der Kamera die Zuordnung der einzelnen Leuchtmittel zu den Pixeln der Kamera hergestellt. In einem Iterationsverfahren wird nun der Stellwert des Stellgliedes KS (siehe Fig. 4) solange variiert, bis das Maximum des Helligkeitsverlaufs des aktuellen Kanals etwa die Hälfte der Sollhelligkeit beträgt (Teilschritt zwei). Um zur gewünschten Gesamthelligkeit zu kommen, wird in Teilschritt drei nacheinander, z.B. von links nach rechts, jedes einzelne Leuchtmittel, jeweils gesteuert über die Stellglieder SL, ebenfalls in iterativen Schritten hinzugeschaltet. Die Iteration für ein Leuchtmittel ist beendet, sobald im Bereich der zuvor festgestellten Pixelzuordnung der Sollhelligkeitswert erreicht ist. Teilschritt vier stellt eine Wiederholung des Teilschrittes drei in umgekehrter Richtung dar (z.B. von rechts nach links). In Teilschritt fünf werden die Ergebnisse der beiden Messläufe, d.h. Teilschritte drei und vier, gemittelt und legen damit die endgültigen Werte für die Stellglieder SL dar.

Sofern die Hintergrundbeleuchtung so ausgelegt ist, dass kein Übersprechen zwischen den einzelnen m Kanälen stattfindet, kann die Einstellung der m Kanäle einzeln in der für einen Kanal geschilderten Weise erfolgen. Durch das Stellglied I gemäß Fig. 4 kann die Helligkeit aller m*n Leuchtmittel unter Beibehaltung der Verhältnisse der Helligkeiten der m*n Leuchtmittel zueinander, eingestellt werden.

Sofern es zwischen den m Kanälen zu einem Übersprechen kommt, ist es vorteilhaft dieses Übersprechen bei der Einstellung zu berücksichtigen. Im Falle einer iterativen Einstellung, werden die Kanäle in der Reihenfolge ihres Übersprechens eingestellt. Unter Umständen kann es vorteilhaft sein in einer weiteren Iteration über die Kanäle das Gesamtergebnis zu optimieren.

Bei einer Einstellung, basierend auf der Kennlinie der Hintergrundbeleuchtung, kann für jeden der m Kanäle die Pixelhelligkeit als Funktion aller m*n Leuchtmittel ermittelt werden. Die Berechnung der Stellgrößen für jedes der Leuchtmittel erfolgt dann analog zur oben geschilderten Berechnung, jedoch m*n dimensional.

### Bezugszeichenliste

- 1: Schüttgutstrom
- 11: Fördereinrichtung
- 12: Kameraeinheit
- 12': Blickrichtung der Kameraeinheit
- 13: Hintergrund
- 14: Beleuchtungslampen
- 15: Separiereinheit
- 16: durchgelassener Schüttgutstrom
- 17: zu separierende Bestandteile
- 21: Leuchtmittel, LED
- 22: Überlagerungsstrecke
- 23: Steuerglied
- 24: Streuscheibe
- 25: Auswerte-Steuereinheit, PC-Rechner
- 31, 32, 33: rot/grün/blau LED
- 34: Spiegelwände
- 41: Integrationszeit der Kameraeinheit
- 42: Pulsweite eines LED-Blitzes
- L1...Ln: Leuchtmittel
- SL: Stellglied Leuchtmittel
- KS: Stellglied Spektralkanal
- K1...Km: Spektralkanäle
- I: Stellglied Gesamtanordnung

## Patentansprüche

1. Vorrichtung zur optischen Selektion von Bestandteilen wenigstens einer Fraktion aus einem längs einer Förderrichtung (11) geförderten Schüttgutstrom (1), mit einer ortsauflösenden Kameraeinheit (12), deren Kamerablickrichtung (12') auf den Schüttgutstrom (1) gerichtet ist, einen in Kamerablickrichtung (12') hinter dem Schüttgutstrom (1) angeordneten Hintergrund (13), dessen Farbe an die Farbe einer ausgewählten Fraktion von Bestandteilen des Schüttgutstromes (1) anpassbar ist, eine mit der Kameraeinheit (12) in Verbindung stehende Auswerte- und Steuereinheit (25), in der nach einem Entscheidungskriterium Steuerbefehle für eine Separiereinheit (15) generierbar sind, die bei Ansteuerung die zu selektierenden Bestandteile (17) aus dem Schüttgutstrom (1) zu separieren vermag,
**dadurch gekennzeichnet, dass** die Kameraeinheit (12) über wenigstens zwei vorzugsweise drei Farbkanäle verfügt, die jeweils über unterschiedliche spektrale Empfindlichkeitsbereiche verfügen,
dass der Hintergrund (13) eine Vielzahl einzelner Leuchtmittel (21) aufweist, von denen jedes einzelne Leuchtmittel (21) Licht mit einer spektralen Verteilung emittiert, die auf jeweils einen spektralen Empfindlichkeitsbereich der Kameraeinheit (12) angepasst ist,
dass die Auswerte- und Steuereinheit (18, 25) eine Einheit zur Bestimmung des örtlichen Verlaufs der Farbe oder Farbwerte eines Bestandteils des Schüttgutstromes (1) quer zur Förderrichtung umfasst,
dass die Auswerte- und Steuereinheit (18, 25) ein Regelmodul enthält, das die einzelnen Leuchtmittel (21) hinsichtlich ihrer Helligkeit derart einstellt, dass die Farbe des Hintergrundes (13) den örtlichen Verlauf des bestimmten Farbwerts annimmt, wobei die Einheit zur Bestimmung eines Farbwertes ortsaufgelöste Farbwertinformationen in Bezug auf Helligkeit und Farbe entlang der Sortierbreite gewinnt, welche als Richtung quer zur Förderrichtung des Schüttgutstroms (1) und zur optischen Achse (12') der Kamera (12) definiert ist.

2. Vorrichtung nach Anspruch 1,
**dadurch gekennzeichnet, dass** die Kameraeinheit (12) eine Videokamera oder Zeilenkamera ist, die wenigstens drei Farbkanäle aufweist, einen roten Farbkanal, einen grünen und einen blauen Farbkanal, die der additiven Farbsynthese entsprechen.

3. Vorrichtung nach Anspruch 1 oder 2,
**dadurch gekennzeichnet, dass** die spektrale Verteilung des Lichts jedes einzelnen Leuchtmittels (21) ausschließlich von einem einzigen Farbkanal der Kameraeinheit (12) detektierbar ist.

4. Vorrichtung nach einem der Ansprüche 1 bis 3,
**dadurch gekennzeichnet, dass** die Leuchtmittel (21) jeweils als Leuchtdioden ausgebildet sind, und dass die Leuchtdioden bezüglich ihres spektralen Emissionsvermögens jeweils in zu den Farbkanälen der Kameraeinheit (12) korrespondiere Gruppen unterteilbar sind.

5. Vorrichtung nach einem der Ansprüche 1 bis 4,
**dadurch gekennzeichnet, dass** die Leuchtmittel (21), die für einen oder mehrere Kanäle vorgesehen sind, aus jeweils wenigstens einer Lichtquelle sowie einem Farbfilter zusammengesetzt sind.

6. Vorrichtung nach einem der Ansprüche 1 bis 5,
**dadurch gekennzeichnet, dass** der Hintergrund (13) ein zwischen den Leuchtmitteln (21) und der Kameraeinheit (12) gelegenes Mittel vorsieht, vorzugsweise eine Streuscheibe (24), welche das von den Leuchtmitteln (21) emittierte Licht in Transmission streut.

7. Vorrichtung nach Anspruch 6,
**dadurch gekennzeichnet, dass** zwischen dem streuenden Mittel (24) und den Leuchtmitteln (21) eine Wegstrecke (22) und / oder Mittel vorgesehen ist, durch das sich das von der Vielzahl der Leuchtmittel (21) emittierte Licht gegenseitig überlagert.

8. Vorrichtung nach Anspruch 7,
**dadurch gekennzeichnet, dass** das das Licht überlagernde Mittel und / oder die freie Wegstrecke spiegelnde seitliche Begrenzungsflächen (34) aufweist, die zwischen den Leuchtmitteln (21) und dem das Licht streuenden Mittel (24) eine Art Spiegelkanal einschließen.

9. Vorrichtung nach einem der Ansprüche 1 bis 8,
**dadurch gekennzeichnet, dass** wenigstens ein optisch abbildendes Element zwischen den Leuchtmitteln (21) und der Kameraeinheit (12) vorgesehen ist, das das seitens der Leuchtmittel (21) emittierte Licht in Richtung der Kameraeinheit (12) abbildet oder fokussiert.

10. Vorrichtung nach einem der Ansprüche 1 bis 9,
**dadurch gekennzeichnet, dass** die Auswerte- und Steuereinheit (25) zur Helligkeitseinstellung der Leuchtmittel (21) wenigstens eine Stelleinheit (23) zur Einstellung des Versorgungsstromes und/oder der Versorgungsspannung jedes einzelnen Leuchtmittels und/oder eine Pulseinheit zur Generierung von an die einzelnen Leuchtmittel anlegbaren Steuerimpulsen aufweist, so dass die Helligkeit der Leuchtmittel (21) über eine Wahl der Spannung und/oder des Stromes und/oder der Pulsfolge einstellbar ist.

11. Vorrichtung nach einem der Ansprüche 1 bis 10,
**dadurch gekennzeichnet, dass** das Regelmodul den Hintergrund (13) unter Zugrundelegung der ortsaufgelösten Farbwertinformationen längs der von der Kamera (12) erfassten Sortierbreite in Bezug auf Helligkeit und Farbe örtlich anpasst.

12. Verfahren zur optischen Selektion von Bestandteilen wenigstens einer Fraktion aus einem längs einer Förderrichtung geförderten Schüttgutstrom (1), bei dem der Schüttgutstrom (1) mittels einer Kameraeinheit (12) vor einem farblich anpassbaren Hintergrund (13) längs einer Sortierbreite erfasst wird, dessen Farbe an die Farbe einer ausgewählten Fraktion von Bestandteilen des Schüttgutstromes (1) anpassbar ist,
und nicht zur ausgewählten Fraktion zählende Bestandteile des Schüttgutstromes (1) von einer Separiereinheit (15) aus dem Schüttgutstrom (1) separiert werden,
**gekennzeichnet durch** folgende Verfahrensschritte:
- einmaliges oder von Zeit zu Zeit wiederholtes Einstellen eines optimalen Verlaufs des farblichen Hintergrundes (13) basierend auf Werten der Stellgrößen, welche von Zeit zu Zeit wiederholt oder in einem Einlernvorgang ermittelt werden, wobei das Anpassen von Helligkeit und Farbe des Hintergrundes (13) innerhalb des Einlern- oder Einstellvorgangs **durch** iteratives Regeln von Helligkeiten einzelner oder Gruppen von den Farbeindruck des Hintergrundes (13) bestimmender Leuchtmittel (21) vorgenommen wird,
- kontinuierliches ortsaufgelöstes Erfassen von sich farblich vom Hintergrund (13) unterscheidenden Bestandteilen im Schüttgutstrom (1) längs der Sortierbreite mittels der Kameraeinheit (12) und
- Separieren der ortsaufgelöst erfassten Bestandteile aus dem Schüttgutstrom (1), die sich ausreichend stark vom farblichen Hintergrund (13) unterscheiden.

13. Verfahren nach den Anspruch 12,
**dadurch gekennzeichnet, dass** die Ermittlung des örtlichen Verlaufes des Farbwertes im Wege einer Schwerpunkts- oder einer Maximumberechnung aus der örtlichen Farbverteilung durchgeführt wird, bei der für jeden Ort längs der Sortierbreite der Schwerpunkt oder das Maximum der erfassten Farbverteilung berechnet wird.

14. Verfahren nach Anspruch 12,
**dadurch gekennzeichnet, dass** der Einstell- oder Einlernvorgang aus einem dreistufigen Prozess besteht:
a) In einer ersten Stufe wird der Hintergrund (13) auf einen Kontrastwert zur Helligkeit der ausgewählten Fraktion eingestellt,
b) In einer zweiten Stufe wird die Helligkeit der ausgewählten Fraktion vor genau diesem Hintergrund (13) eingelernt und
c) in einer dritten Stufe übernehmen die Leuchtmittel (21) zur Beleuchtung des Hintergrundes (13) die in Stufe zwei ermittelte Helligkeit der ausgewählten Fraktion.

15. Verfahren nach Anspruch 12,
**dadurch gekennzeichnet, dass** die erste und dritte Stufe jeweils in fünf Teilschritte unterteilt werden:
T1) Zuordnung der einzelnen Leuchtmittel (21) zu den einzelnen Farbkanälen der Kamera (12),
T2) Einstellen aller Leuchtmittelhelligkeit pro Spektralkanal mittels eines Stellgliedes (KS) bis das Maximum des Helligkeitsverlaufs des jeweiligen Spektralkanals etwa die Hälfte einer Sollhelligkeit beträgt,
T3) Iteratives Nachstellen jedes einzelnen Leuchtmittels (21), jeweils gesteuert über Stellglieder (SL) bis die Sollhelligkeit erreicht ist,
T4) Wiederholen des Teilschrittes drei mit veränderter Reihenfolge bei der Leuchtmitteleinstellung, und
T5) Mittelung der in den Teilschritten drei und vier gewonnenen Helligkeitswerte und Einstellen der Stellglieder SL unter Zugrundelegung der gemittelten Helligkeitswerte.

## Claims

1. A device for the optical selection of components of at least one fraction from a bulk material stream (1) conveyed along a conveying device (11), with a spatially resolving camera unit (12), the camera viewing direction (12') whereof is directed onto the bulk material stream (1), a background (13) disposed behind the bulk material stream (1) in the camera viewing direction (12'), the colour of which background can be adapted to the colour of a selected fraction of components of the bulk material stream (1), an evaluation and control unit (25) which is connected to the camera unit (12) and in which control commands can be generated according to a decision criterion for a separating unit (15), which is capable, upon activation, of separating the components (17) to be selected from the bulk material stream (1}, **characterised in that** the camera unit (12) comprises at least two, preferably three colour channels, which each comprise different spectral sensitivity regions,
that the background (13) comprises a multiplicity of individual luminous means (21), each of which individual luminous means (21) emits light with a spectral distribution which is adapted in each case to a spectral sensitivity region of the camera unit (12),
that the evaluation and control unit (18, 25) comprises a unit for determining the spatial profile of the colour or colour values of a component of the bulk material stream (1) normal to the conveying direction,
that the evaluation and control unit (18, 25) contains a regulating module, which adjusts the individual luminous means (21) with regard to their brightness in such a way that the colour of the background (13) assumes the spatial profile of the specific colour value, wherein the unit for determining a colour value acquires spatially resolved colour value information in respect of brightness and colour along the sorting width, which is defined as the direction normal to the conveying direction of the bulk material stream (1) and to the optical axis (12') of the camera (12).

2. The device according to claim 1, **characterised in that** the camera unit (12) is a video camera or a line scan camera, which comprises at least three colour channels, a red colour channel, a green and a blue colour channel, which correspond to the additive colour synthesis.

3. The device according to claim 1 or 2, **characterised in that** the spectral distribution of the light of each individual luminous means (21) can be detected exclusively by a single colour channel of the camera unit (12).

4. The device according to any one of claims 1 to 3, **characterised in that** the luminous means (21) are each constituted as light emitting diodes, and that the light emitting diodes can each be split up, in respect of their spectral emissivity, into groups corresponding to the colour channels of the camera unit (12).

5. The device according to any one of claims 1 to 4, **characterised in that** the luminous means (21), which are intended for one or more channels, are composed of at least one light source and one colour filter.

6. The device according to any one of claims 1 to 5, **characterised in that** the background (13) provides a means, preferably a scattering plate (24), located between the luminous means (21) and the camera unit (12), which means scatters the light emitted by the luminous means (21) in transmission.

7. The device according to claim 6, **characterised in that** there is provided between the scattering means (24) and the luminous means (21) a path length (22) and/or means, by means of which the light emitted by the multiplicity of luminous means (21) is mutually superimposed.

8. The device according to claim 7, **characterised in that** the means superimposing the light and/or the free path length comprises reflecting lateral boundary faces (34), which enclose a kind of mirror channel between the luminous means (21) and the means (24) scattering the light.

9. The device according to any one of claims 1 to 8, **characterised in that** at least one optically imaging element is provided between the luminous means (21) and the camera unit (12), said element imaging or focusing the light emitted by the luminous means (21) in the direction of the camera unit (12).

10. The device according to any one of claims 1 to 9, **characterised in that** the evaluation and control unit (25) for the brightness adjustment of the luminous means (21) comprises at least one adjusting unit (23) for adjusting the supply current and/or the supply voltage of each individual luminous means and/or a pulse unit for generating control pulses that can be applied to the individual luminous means, so that the brightness of the luminous means (21) can be adjusted by selecting the voltage and/or the current and/or the pulse sequence.

11. The device according to any one of claims 1 to 10, **characterised in that** the regulating module spatially adapts the background (13) in respect of brightness and colour on the basis of the spatially resolved colour value information along the sorting width detected by the camera (12).

12. A method for the optical selection of components of at least one fraction from a bulk material stream (1) conveyed along a conveying device, wherein the bulk material stream (1) is detected by means of a camera unit (12) against a colour-adaptable background (13) along a sorting width, the colour whereof can be adapted to the colour of a selected fraction of the components of the bulk material stream (1),
and components of the bulk material stream (1) not belonging to the selected fraction are separated from the bulk material stream (1) by the separating unit (15),
**characterised by** the following process steps:
- a one-off adjustment, or an adjustment repeated from time to time, of an optimum profile of the colour background (13) based on values of the manipulated variables, which are ascertained repeatedly from time to time or in a single teach-in procedure, wherein the adaptation of brightness and colour of the background (13) is carried out in the teach-in or adjustment procedure by iterative regulation of brightnesses of individual or groups of luminous means (21) determining colour perception of the background (13),
- continuous spatially resolved detection of components in the bulk material stream (1) differing in colour from the background (13) along the sorting width by means of the camera unit (12) and
- separation of components detected spatially resolved from the bulk material stream (1), said components differing sufficiently markedly from the colour background (13).

13. The method according to claim 12, **characterised in that** the ascertainment of the spatial profile of the colour value is carried out by means of a point-of-concentration or maximum calculation from the spatial colour distribution, wherein the point-of-concentration or the maximum of the detected colour distribution is calculated for each location along the sorting width.

14. The method according to claim 12,
**characterised in that** the adjustment or teach-in procedure comprises a three-step process:
a) in a first step, the background (13) is adjusted to a contrast value for the brightness of a selected fraction,
b) in a second step, the brightness of the selected fraction is taught-in before precisely this background (13) and
c) in a third step, the luminous means (21) for the illumination of the background (13) assume the brightness of the selected fraction ascertained in step two.

15. The method according to claim 12,
**characterised in that** the first and third step are each broken down into five sub-steps:
T1) assignment of the individual luminous means (21) to the individual colour channels of the camera (12),
T2) adjustment of all luminous-means brightness per spectral channel by means of an actuator (KS) until the maximum of the brightness curve of the respective spectral channel amounts to approximately half of the setpoint brightness,
T3) iterative readjustment of each individual luminous means (21), in each case controlled by actuators (SL) until the setpoint brightness is reached,
T4) repetition of sub-step three with a changed sequence in the luminous-means adjustment, and
T5) averaging of the brightness values obtained in sub-steps three and four and adjustment of actuators SL on the basis of the averaged brightness values.

## Revendications

1. Dispositif de sélection optique de composantes d'au moins une fraction d'un flux de produit en vrac (1) transporté dans un sens de convoyage (11), comportant une unité de caméra (12) à définition localisée dont le sens de vision de caméra (12') est tourné vers le flux de produit en vrac (1), un arrière-plan (13) disposé derrière le flux de produit en vrac (1) dans le sens de vision de la caméra (12') et dont la couleur est adaptable à la couleur d'une fraction sélectionnée de composantes du flux de produit en vrac (1), une unité d'exploitation et de commande (25) en liaison avec l'unité de caméra (12) et dans laquelle peuvent être générées d'après un critère de décision des instructions de commande pour une unité de séparation (15) qui, quand elle est amorcée, peut séparer les composantes à sélectionner (17) du flux de produit en vrac (1),
**caractérisé en ce que** l'unité de caméra (12) dispose d'au moins deux, de préférence trois, canaux colorés qui disposent respectivement de plages de sensibilité spectrales différentes,
que l'arrière-plan (13) présente une multitude de moyens d'éclairage (21) dont chaque moyen d'éclairage individuel (21) émet de la lumière ayant une répartition spectrale qui est respectivement adaptée à une plage de sensibilité spectrale de l'unité de caméra (12),
que l'unité d'exploitation et de commande (18, 25) comprend une unité de définition de l'évolution localisée de la couleur ou des valeurs colorées d'une composante du flux de produit en vrac (1) en travers du sens de convoyage,
que l'unité d'exploitation et de commande (18, 25) contient un module de réglage qui règle la luminosité des moyens d'éclairage individuels (21) de manière à ce que la couleur de l'arrière-plan (13) adopte l'évolution localisée de la valeur colorée définie, l'unité de définition d'une valeur colorée récupérant des informations de valeur colorée à définition localisée concernant la luminosité et la couleur sur la largeur de tri qui est définie en tant que direction transversale au sens de convoyage du flux de produit en vrac (1) et à l'axe optique (12') de la caméra (12).

2. Dispositif selon la revendication 1, **caractérisé en ce que** l'unité de caméra (12) est une caméra vidéo ou une caméra linéaire qui présente au moins trois canaux colorés, un canal coloré rouge, un canal coloré vert et un bleu, qui correspondent à la synthèse colorée additionnelle.

3. Dispositif selon la revendication 1 ou 2, **caractérisé en ce que** la répartition spectrale de la lumière de chaque moyen d'éclairage individuel (21) est détectable exclusivement par un unique canal coloré de l'unité de caméra (12).

4. Dispositif selon une des revendication 1 à 3, **caractérisé en ce que** les moyens d'éclairage (21) se présentent respectivement sous forme de diodes électroluminescentes et que les diodes électroluminescentes peuvent être respectivement subdivisées, au niveau de leur capacité d'émission spectrale, en groupes correspondant aux canaux colorés de l'unité de caméra (12).

5. Dispositif selon une des revendications 1 à 4, **caractérisé en ce que** les moyens d'éclairage (21) qui sont prévus pour un ou plusieurs canaux sont respectivement composés d'au moins une source lumineuse et d'un filtre coloré.

6. Dispositif selon une des revendications 1 à 5, **caractérisé en ce que** l'arrière-plan (13) prévoit un moyen placé entre les moyens d'éclairage (21) et l'unité de caméra (12), de préférence un disque diffuseur (24) qui diffuse par transmission la lumière émise par les moyens d'éclairage (21).

7. Dispositif selon la revendication 6, **caractérisé en ce que**, entre le moyen diffuseur (24) et les moyens d'éclairage (21), il est prévu un parcours (22) et/ou un moyen grâce auquel la lumière émise par la multitude de moyens d'éclairage (21) se superpose réciproquement.

8. Dispositif selon la revendication 7, **caractérisé en ce que** le moyen superposant la lumière et/ou le parcours dégagé présente des surfaces de limitation latérales réfléchissantes (34) qui circonscrivent une sorte de canal réfléchissant entre les moyens d'éclairage (21) et le moyen diffuseur de lumière (24).

9. Dispositif selon une des revendications 1 à 8, **caractérisé en ce qu'**il est prévu entre les moyens d'éclairage (21) et l'unité de caméra (12) au moins un élément de restitution optique qui restitue ou focalise la lumière émise par les moyens d'éclairage (21) en direction de l'unité de caméra (12).

10. Dispositif selon une des revendications 1 à 9, **caractérisé en ce que** l'unité d'exploitation et de commande (25) pour régler la luminosité des moyens d'éclairage (21), présente au moins une unité de réglage (23) permettant de régler le courant d'alimentation et/ou la tension d'alimentation de chaque moyen d'éclairage individuel et/ou une unité d'impulsion pour générer des impulsions de commande applicables aux différents moyens d'éclairage, de manière à ce que la luminosité des moyens d'éclairage (21) soit réglable en choisissant la tension et/ou le courant et/ou la succession d'impulsions.

11. Dispositif selon une des revendications 1 à 10, **caractérisé en ce que** le module de réglage adapte localement l"arrière-plan (13) en prenant comme base les informations de valeur colorée à définition localisée sur la largeur de tri détectée par la caméra (12) concernant la luminosité et la couleur.

12. Dispositif de sélection optique de composantes d'au moins une fraction d'un flux de produit en vrac (1) transporté dans un sens de convoyage (11), dans lequel le flux de produit en vrac (1) est détecté sur une largeur de tri au moyen d'une unité de caméra (12) devant un arrière-plan (13) de couleur adaptable dont la couleur est adaptable à la couleur d'une fraction sélectionnée de composantes du flux de produit en vrac (1)
et les composantes ne faisant partie de la fraction sélectionnée du flux de produit en vrac (1) sont séparées du flux de produit en vrac (1) par une unité de séparation (15),
**caractérisé par** les étapes opératoires suivantes :
- réglage en une seule fois ou répétitivement de temps en temps d'une évolution optimale de l'arrière-plan coloré (13) en se basant sur des valeurs de paramètres de réglage qui sont déterminées répétitivement de temps en temps ou dans un processus d'apprentissage, l'adaptation de la luminosité et de la couleur de l'arrière-plan (13) étant effectuée par réglage itératif des luminosités de moyens d'éclairage isolés ou de groupes de moyens d'éclairage (21) définissant l'impression colorée de l'arrière-plan,
- détection continue à définition localisée de composantes se distinguant par leur couleur de l'arrière-plan (13) du flux de produit en vrac (1) sur la largeur de tri au moyen de l'unité de caméra (12) et
- séparation des composantes détectées avec une définition localisée du flux de produit en vrac (1) et qui se distinguent suffisamment nettement de l'arrière-plan coloré (13).

13. Procédé selon la revendication 12, **caractérisé en ce que** la détermination de l'évolution locale de la valeur colorée est réalisée au cours d'un calcul de centre de gravité ou de maximum à partir de la répartition locale de la couleur pour laquelle le centre de gravité ou le maximum de la répartition locale de la couleur détectée est calculé pour chaque lieu sur la largeur de tri.

14. Procédé selon la revendication 12,
**caractérisé en ce que** le processus de réglage ou d'apprentissage consiste en un processus en trois étapes :
a) dans une première étape, l'arrière-plan (13) est réglé sur une valeur de contraste pour la luminosité de la fraction sélectionnée,
b) dans une deuxième étape, la luminosité de la fraction sélectionnée est apprise précisément devant cet arrière-plan (13) et
c) dans une troisième étape, les moyens d'éclairage (21), pour éclairer l'arrière-plan (13), adoptent la luminosité déterminée dans l'étape deux de la fraction sélectionnée.

15. Procédé selon la revendication 12,
**caractérisé en ce que** la première et la troisième étapes sont divisées en cinq sous-étapes :
T1) Association des moyens d'éclairage individuels (21) aux canaux colorés individuels de la caméra (12),
T2) Réglage de la luminosité de tous les moyens d'éclairage par canal spectral au moyen d'un élément de réglage (KS) jusqu'à ce que le maximum de l'évolution de luminosité du canal spectral respectif représente environ la moitié d'une luminosité théorique,
T3) Réajustement itératif de chaque moyen d'éclairage individuel (21), commandé respectivement par des éléments de réglage (S1) , jusqu'à atteinte de la luminosité théorique,
T4) Répétition de la sous-étape trois dans un ordre modifié lors du réglage des moyens d'éclairage et
T5) Calcul de la moyenne des valeurs de luminosité obtenues dans les sous-étapes trois et quatre et réglage des éléments de réglage SL en prenant pour base les moyennes des valeurs de luminosité.
